# EUROPÄISCHE PATENTSCHRIFT

(11) **EP 3 676 138 B1**
(45) Veröffentlichungstag und Bekanntmachung des Hinweises auf die Patenterteilung: **05.01.2022**
(21) Anmeldenummer: 18765028.8
(22) Anmeldetag: 21.08.2018
(51) Int. Cl.: B60T 13/66, B60T 17/22

(54) **VERFAHREN UND EINRICHTUNG ZUR ERMITTLUNG VON BREMSUNGSRELEVANTEN IST-WERTEN EINES SCHIENENFAHRZEUGES FÜR DIE DURCHFÜHRUNG EINER VERZÖGERUNGSGEREGELTEN BREMSUNG MIT ZENTRALER SENSORIK**
METHOD AND DEVICE FOR DETERMINING BRAKING-RELATED ACTUAL VALUES OF A RAIL VEHICLE FOR CARRYING OUT A DECELERATION-CONTROLLED BRAKING WITH A CENTRAL SENSOR SYSTEM
PROCÉDÉ ET DISPOSITIF DE DÉTERMINATION DE VALEURS RÉELLES RÉELES LIÉES AU FREINAGE D'UN VÉHICULE FERROVIAIRE POUR EFFECTUER UN FREINAGE À DÉCÉLÉRATION RÉGULÉE AVEC CAPTEURS CENTRALISÉS

(30) Priorität: 31.08.2017 DE 102017119994
(43) Veröffentlichungstag der Anmeldung: 08.07.2020
(73) Patentinhaber: KNORR-BREMSE Systeme für Schienenfahrzeuge GmbH, 80809 München (DE)
(72) Erfinder: TOMBERGER, Christoph, 80469 München (DE); FRIESEN, Ulf, 85579 Neubiberg (DE)
(86) Internationale Anmeldenummer: PCT/EP2018/072507
(87) Internationale Veröffentlichungsnummer: WO 2019/042816

(56) Entgegenhaltungen:
- DE-A1- 19 933 789
- DE-A1-102015 110 053
- US-A1- 2010 235 022

## Beschreibung

Die Erfindung betrifft ein Verfahren sowie eine Einrichtung zur Ermittlung von bremsungsrelevanten IST-Werten und für die Durchführung einer verzögerungsgeregelten Bremsung eines aus vielen Wagen bestehenden Zugverbands, bei welchem dessen Längsverzögerung und die Längsneigung als IST-Werte berücksichtigt wird, woraus durch einen Verzögerungsregler nach Maßgabe eines vorgegebenen SOLL-Wertes einer gewünschten Bremsverzögerung ein die Regelabweichung ausgleichender Stellwert für ein Stellglied der Bremse ermittelt wird.

Das Einsatzgebiet der vorliegenden Erfindung erstreckt sich vornehmlich auf den Schienenfahrzeugbau. Die gewöhnlich aus einzelnen Wagen zusammengesetzten Zugverbände müssen im Verkehr vorgegebene Bremswege einhalten und insbesondere an ihnen zuvor signalisierten Punkten zum Stehen kommen. Die Bremsung eines Schienenfahrzeugs erfolgt nach genau definierten Kriterien, unter anderem Verzögerungskennlinien, deren Einhaltung relevant für die Sicherstellung des wirtschaftlichen und sicheren Betriebs des Schienenfahrzeugs ist. Bei jeder Bremsung eines modernen Schienenfahrzeugs sind verschiedene Bremstypen beteiligt, beispielsweise Reibungsbremsen, elektrodynamische Bremsen, Magnetschienenbremsen oder Wirbelstrombremsen. Jede dieser Bremsen hat spezifische Vorzüge, beispielsweise einen Geschwindigkeits- oder Leistungsbereich, in dem eine effiziente und verschleißminimale Bremsung möglich ist. Jeder Bremstyp weist dabei spezifische Toleranzen und Ungenauigkeiten in der Umsetzung der Bremskraft auf, was zu ungewünschten Variationen der erreichten Bremskraft im Verlauf von Bremsvorgängen führt.

Vor diesem Hintergrund würde die exakte Dosierung einer Bremsung eine Rückkopplung der tatsächlich ausgeübten Bremskraft erfordern, indem diese beispielsweise dem Fahrzeugführer über eine Anzeige im Führerstand mitgeteilt oder direkt einer elektronischen Regelschleife für die Bremskraft als IST-Wert zugeführt wird. Speziell bei gleichzeitigem Zusammenwirken mehrerer Bremstypen lässt sich jedoch die von jeder einzelnen Bremse ausgeübte Bremskraft nicht direkt messen, sondern nur über einen Umweg mit entsprechenden Ungenauigkeiten, etwa über die aufgenommene elektrische Leistung, über einen Bremszylinderdruck oder über Materialdehnungen. Der physikalische Zusammenhang zwischen diesen Größen und der Bremskraft ist häufig nicht linear und unterliegt zudem systematischen und zufälligen Schwankungen.

Aus der DE 10 2011 052 545 A1 geht eine technische Lösung hervor, mit welcher zur Lösung der vorgenannten Problematik die für die Längsverzögerung des Fahrzeugs repräsentativen Werte als IST-Werte verwendet werden, um über eine Regelschleife einen vorgegebenen SOLL-Werte für die Längsverzögerung des Fahrzeugs anzustreben. Es wird also die Auswirkung einer Bremsung in Form einer Verzögerung auf Fahrzeugebene geregelt. Allerdings liefert diese Regelung nicht die tatsächlich wirksame Bremskraft. Die Regelung auf einen SOLL-Wert für die Längsverzögerung des Fahrzeugs hat zudem die Nebenwirkung, dass in der Steigung der Fahrstrecke die topologiebedingte mögliche Verzögerung nicht ausgeschöpft wird, und dass im Gefälle einer Fahrstrecke die Bremse überbeansprucht wird.

Die DE 10 2015 110 053 A1 schlägt zur Lösung dieser Problematik vor, dass zusätzlich zur Erfassung der auf das Fahrzeug wirkenden Längsverzögerung auch die durch eine Steigung oder Gefälle der Fahrstrecke hervorgerufene Hangabtriebskraft ermittelt wird, so dass die Bremskraft auf Basis der Längsverzögerung des Fahrzeugs sowie der Hangabtriebskraft kalkuliert wird.

In der US 2010/235022 A1 ist ein Verfahren zum Steuern eines ersten und eines zweiten Triebwagens eines gemeinsamen Zugverbands offenbart. Der erste und der zweite Triebwagen werden dabei anhand von einer Auswertung von einem Standort und der Betriebszustände zusammen gesteuert.

Die Längsverzögerung des Fahrzeugs ist die kinematische Verzögerung entlang der Fahrzeuglängsachse. Die Fahrzeuglängsachse ist stets parallel zur Fahrstrecke, so dass sich diese beim Übergang in eine Steigung oder in ein Gefälle mit der Fahrstrecke neigt.

Die Hangabtriebskraft ist diejenige Kraft, die bei einer Neigung der Fahrstrecke aus der Ebene heraus, also durch Steigung oder Gefälle, in Fahrtrichtung auf das Fahrzeug wirkt. Die senkrecht nach unten gerichtete Gewichtskraft des Fahrzeugs im Schwerefeld der Erde lässt sich als Vektorsumme aus dieser Hangabtriebskraft und einer zum Fahrzeug senkrechten, vom Fahrzeug auf den Fahrweg übertragenen Normalkraft ansehen.

Die Verwendung eines Verzögerungssensors, der auch statisch die Erdbeschleunigung mit misst zur Ermittlung der Längsverzögerung des Fahrzeugs hat den Vorteil, dass Steigungen und Gefälle nicht zu einer Änderung des Sensorsignals führen, so dass der Einfluss von Steigung und Gefälle auf die Längsverzögerung des Fahrzeugs nicht berücksichtigt wird. Das bedeutet, dass die aufgrund einer Steigung auftretende Verzögerung des Fahrzeugs, wie sie beim reinen Rollen auch auftreten würde, im Sensorsignal nicht auftritt. Der Sensor misst nur zusätzliche Verzögerungen, welche beispielsweise durch die Bremsung auftreten. Wenn dies nicht der Fall ist, die Verzögerung also beispielsweise anhand der Fahrzeuggeschwindigkeit ermittelt und geregelt wird, führt dies dazu, dass der Bremsweg unabhängig von Steigungen eingestellt wird. Das bedeutet, dass der Bremsweg in der Ebene gleich lang ist wie in Steigungen. Das ist nicht wünschenswert, da die Vorsignalabstände zwischen Vor- und Hauptsignal aufgrund länderspezifischer Vorschriften an die Steigung des Fahrwegs angepasst sein könnten. Außerdem würde das Fahrzeug in Steigungen entbremst werden und sich somit unnatürlich verhalten. Die Verwendung eines Verzögerungssensors zur Ermittlung der Längsverzögerung des Fahrzeugs im Rahmen einer Regelung der Verzögerung führt also zu einem gewünschten Verhalten des Gesamtsystems, indem die durch Steigung und Gefälle auftretenden Längsbeschleunigungen des Fahrzeugs im IST-Signal des Verzögerungssensors nicht berücksichtigt werden.

Bei aus vielen einzelnen Wagen bestehenden langen Zugverbänden kann es bei einem zentral im Zugverband an beliebiger Stelle, vorzugsweise im Führungsfahrzeug, angeordneten Verzögerungssensor im Falle einer Steigungsänderung der Fahrstrecke zu einer abweichenden Interpretation der Bremskraft kommen, da hintere Wagen des Zugverbands diesen noch anschieben oder abbremsen können. Denn insbesondere bei langen Zugverbänden und den in der Infrastruktur auftretenden örtlichen Gefälleänderungen ist es nicht gewährleistet, dass alle Wagen des Zugverbands sich zu jedem Zeitpunkt im selben oder auch nur annähernd selben Gefälle oder Steigung befinden. Die auf das Schienenfahrzeug wirkende Längsbeschleunigung aufgrund von Gefälle oder Steigung ergibt sich aus dem Gefälle bzw. Steigung, in dem sich jeder einzelne Wagen befindet. Jeder Wagen kann sich bei Änderungen von Steigung oder Gefälle in einem anderen Bereich befinden.

Beispielsweise wird bei Überfahrt einer Kuppe der Einfluss der Gefälleänderung auf die Längsverzögerung des Zugverbandes variieren. In der Steigung wirkt diese verzögernd. Auf der Kuppe, wobei der führende Wagen sich im Gefälle und der letzte Wagen sich noch in der Steigung befindet, hat das Gefälle gar keine Auswirkung auf die Längsverzögerung des Zuges, gleich wie in der Ebene und im nachfolgenden Gefälle wird der Zug beschleunigt. Bremst das Schienenfahrzeug während einer Gefälleänderung mit aktiviertem Verzögerungsregler, so ergibt sich bei der Messung der Längsverzögerung mittels Beschleunigungssensors an einer zentralen Stelle des Zuges ein Fehler zwischen Messwert und der tatsächlich erwarteten gefälle- bzw. steigungskompensierten Verzögerung. Dieser Fehler kann zu einer signifikanten Bremswegverlängerung des Zuges führen.

Es ist die Aufgabe der vorliegenden Erfindung, ein Verfahren sowie eine Einrichtung zur zentralen Messwerterfassung für eine Verzögerungsregelung, insbesondere eines Schienenfahrzeugs, zu schaffen, welches/welche eine genaue Bremsung bei aus vielen Wagen bestehenden langen Zugverbänden sicherstellt.

Die Aufgabe wird ausgehend von einem Verfahren gemäß dem Oberbegriff von Anspruch 1 in Verbindung mit dessen kennzeichnenden Merkmalen gelöst. Einrichtungstechnisch wird die Aufgabe durch Anspruch 10 gelöst. Die jeweils rückbezogenen abhängigen Ansprüche geben vorteilhafte Weiterbildungen der Erfindung wieder.

Die Erfindung schließt die technische Lehre ein, dass die Erfassung und/oder Kalkulation der bremsungsrelevanten IST-Werte durch eine im vordersten Zugteil positionierte und mehrere Sensoren aufweisende zentrale Messwerterfassungseinheit für den gesamten Zugverband durchgeführt wird, wobei die Zuglänge als zusätzlicher zentral ermittelter IST-Wert durch den Verzögerungsregler derart mitberücksichtigt wird, dass bei der Kalkulation des Stellwertes zum Ausgleich einer Regelabweichung ein zuglängenabhängig unterschiedlicher Bremsbedarf aufgrund des sich aus der ermittelten Längsneigung im vorderen Zugteil ergebenen Steigerungsprofils entlang der Zuglänge berücksichtigt wird.

Somit ist eine Optimierung der Verzögerungs- oder Bremskraftregelung eines Schienenfahrzeugs durch Ermittlung der Verzögerungs- oder Bremskraft des Schienenfahrzeugs mithilfe der Messwerterfassungseinheit möglich, welche im vordersten Zugteil, vorzugsweise dem Führungsfahrzeug, zentral im Zugverband positioniert ist. Zur Messwerterfassungseinheit gehören vorzugsweise mehrere Sensoren, welche an dieser zentralen Position die Längsverzögerung und/oder die Längsneigung per Winkelmessung ermitteln. Alternativ können diese Messwerte auch durch Umrechnung aus anderen physikalischen Größen oder durch Vorgabe von anderen Systemeinheiten des Schienenfahrzeugs gewonnen werden.

Mithilfe dieser Messgrößen und in Kenntnis der Zuglänge kann in einer Zug-Modellkalkulation der Messwerterfassungseinheit der erfindungsgegenständliche IST-Wert einer Zugverzögerung in Abhängigkeit der Änderung der Steigung permanent (onboard) berechnet werden. Dieses IST-Signal steht dann dem eigentlichen Verzögerungsregler der Bremsansteuerung, welcher sich vorzugsweise in demselben Steuergerät wie die Messwerterfassungseinheit befindet, zur Verfügung.

Der Vorteil dieses Verfahrens ist, dass nur Sensoren an einem zentralen Ort benötigt werden und keine umfangreiche Datenkommunikation über die Länge des Zuges notwendig ist. Wird ein Schienenfahrzeug in beide Richtungen betrieben, so ist die das erfindungsgemäße Verfahren umsetzende Einrichtung an den beiden Zugenden vorzusehen, welche abwechselnd das vorderste Zugteil im Sinne der Erfindung bilden, da die erfindungsgemäße Einrichtung immer im führenden Zugteil aktiv sein muss.

Durch die erfindungsgemäße Lösung einer IST-Wert Ermittlung mit Verzögerungssensoren unter Berücksichtigung der Zuglänge kann eine Bremsung auch bei langen Schienenfahrzeugkonfigurationen in Übergangsstrecken von Steigungen optimal genutzt werden.

In Weiterentwicklung der erfindungsgemäßen Lösung kann die neigungsbezogene Längsverzögerung für jeden Wagen des Zugverbands auch separat ermittelt werden. Zur Kalkulation eines einheitlichen Stellwerts wird allerdings vorgeschlagen, einen Mittelwert aus den einzelnen neigungsbezogenen Längsverzögerungen für jeden Wagen zu bilden. Für die separate neigungsbezogene Längsverzögerung ist es nicht erforderlich, dass in jedem Wagen des Zugverbandes eine entsprechende Sensorik installiert ist. Durch die Zug-Modellkalkulation können diese einzelnen IST-Werte bei bekannter Fahrgeschwindigkeit des Schienenfahrzeugs viel einfacher per Berechnung ermittelt werden.

Vorzugsweise wird die Zuglänge derart anhand des Zugmodells kalkuliert, dass die Anzahl der aneinandergekoppelten Wagen des Zugverbandes sowie deren jeweilige Länge berücksichtigt wird. Durch Addition der Teillängen ergibt sich die berechnete Gesamtzuglänge des Schienenfahrzeugs, welche nach Änderung der Anzahl der Wagen sowie von Wagentypen auch flexibel angepasst werden kann.

Die dem Verzögerungsregler des Bremssystems eingangsseitig zugeführten IST-Werte der Längsverzögerung des Schienenfahrzeugs, der Fahrgeschwindigkeit sowie der Längsneigung können auf verschiedene Weise ermittelt werden:
Hinsichtlich der Längsverzögerung des Schienenfahrzeugs ist es möglich, diese entweder entlang des Zugverbands mittels mathematischer Ableitung aus einer Geschwindigkeitsmessung zu gewinnen oder direkt, mittels Beschleunigungssensor. Die erste bevorzugte Alternative liefert einen nicht-steigungskompensierten IST-Wert für die Längsverzögerung, wohingegen der sensortechnisch ermittelte Messwert einen steigungskompensierten IST-Wert hierfür liefert, wie vorstehend erörtert wurde.

Der IST-Wert der Geschwindigkeit des Schienenfahrzeugs kann ebenfalls sensortechnisch über eine Drehzahlmessung an einem Fahrzeugrad mittels Impulsgeber und nachfolgender Geschwindigkeitsberechnung durch Einbeziehung des Raddurchmessers erfolgen. Alternativ hierzu ist auch eine Radarmessung oder eine Messung mittels optischer Sensoren oder dergleichen denkbar. Ferner kann auch eine GPS (Global Positioning System)-Signalverarbeitung die aktuelle Geschwindigkeit des Schienenfahrzeugs liefern.

Der IST-Wert der Längsneigung lässt sich beispielsweise durch einen Winkelmesssensor ermitteln. Mit dem Winkelmesssensor wird der direkte Winkel oder dessen Änderung der Fahrzeuglängsachse zur Waagerechten gemessen. Dieser Winkelsensor kann auch auf Basis von Beschleunigungssensoren, die den ausgelenkten Winkel zur Erdbeschleunigung messen, ausgeführt sein. Daneben kann eine Steigungs-/Gefällebestimmung auch über eine Ortsbestimmung mittels GPS und einem hierin hinterlegten Höhenprofil der Fahrstrecke durchgeführt werden. Eine weitere Alternative bildet die Bestimmung des Winkels aus einem Vergleich zwischen dem Signal des steigungskompensierten Verzögerungssensors und einem nicht-steigungskompensierten Signal aus der Geschwindigkeit, beispielsweise gewonnen aus Raddrehzahlen oder dem GPS-Signal.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Seitenansicht eines auf einer Steigungsstrecke fahrenden Zugverbands,
- Fig. 2: eine schematische Seitenansicht eines Teils des Zugverbands gemäß Fig. 1 mit einer Einrichtung zur Ermittlung von bremsungsrelevanten IST-Werten,
- Fig. 3: eine Blockschaltbilddarstellung einer aus Messwerterfassungseinheit und Verzögerungsregler bestehenden Baueinheit.

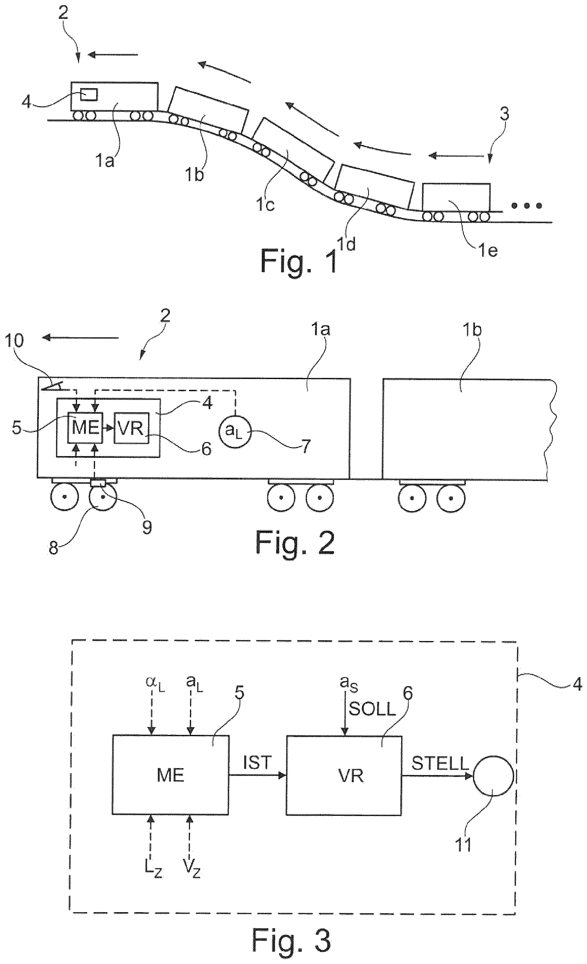

Fig. 1 zeigt einen aus vielen Wagen 1a bis 1e bestehenden Zugverband in Form eines Schienenfahrzeugs. Jedem der Wagen 1a bis 1e ist die individuelle Fahrrichtung per Vektorpfeil zugeordnet. Demnach befindet sich der Zugverband auf einer Steigungsfahrt, bei welcher der Wagen 1a des vordersten Zugteils 2 momentan die maximale Höhe erreicht hat, während sich die mittleren Wagen 1b bis 1d auf einer Steigungsstrecke befinden und der das hintere Zugteil 3 bildende Wagen 1e sich noch am Beginn der Steigungsstrecke befindet. Während der hier dargestellten exemplarischen Steigungsfahrt ist es für eine gleichmäßige verzögerungsgeregelte Bremsung unter Verwendung von nur einer vorderen Messstelle für die Bestimmung der Längsverzögerung des Zugverbands als IST-Wert von Vorteil, wenn auch die individuelle Längsneigung jeden Wagens 1a bis 1e und der hieraus resultierende unterschiedliche Bremsbedarf in die Kalkulation des Stellwerts zur Erzielung des vorgegebenen SOLL-Werts einer gewünschten Bremsverzögerung berücksichtigt wird.

Fig. 2 zeigt eine zu diesem Zweck im vordersten Zugteil 2 - hier im Wagen 1a - angeordnete Baueinheit 4, welche aus einer Messwerterfassungseinheit 5 sowie einem hiermit verbundenen Verzögerungsregler/Verzögerungskraftregler 6 besteht. Die Messwerterfassungseinheit 5 misst permanent die Längsverzögerung a_{L} mittels eines Beschleunigungssensors 7, der ebenfalls Bestandteil der Messwerterfassungseinheit 5 ist. Der Beschleunigungssensor 7 ist im Wagen 1a angeordnet. Zusätzlich wird bei diesem Ausführungsbeispiel die Geschwindigkeit vz des Schienenfahrzeugs über einen an einem Fahrzeugrad 8 angeordneten Drehzahlsensor 9 gemessen und der Messwerterfassungseinheit 5 eingangsseitig zugeführt. Der Drehzahlsensor 9 ist ebenfalls Bestandteil der zentralen Messwerterfassungseinheit 5. Der Messwerterfassungseinheit 5 gehen darüber hinaus noch weitere gemessene oder kalkulatorisch ermittelte IST-Werte zur Verzögerungsregelung zu, die nachfolgend erläutert werden.

Fig. 3 zeigt in Blockschaltbilddarstellung der Verzögerungsregler/ Verzögerungskraftregler die im Rahmen der Baueinheit 4 zusammengefasst angeordnete Messwerterfassungseinheit 5 mit nachgeschaltetem Verzögerungsregler/Verzögerungskraftregler 6. Demnach werden der Messwerterfassungseinheit 5 neben dem Messwert der Geschwindigkeit vz des Schienenfahrzeugs und der Längsverzögerung a_{L} auch die Längsneigung α_{L} sowie die aus einem Zugmodell abgeleitete Zuglänge Lz zugeführt. Hieraus ermittelt die Messwerterfassungseinheit 5 nach Maßgabe der erfindungsgemäßen Lösung einen bremsungsrelevanten IST-Wert, woraus der Verzögerungsregler 6 im Vergleich mit einem vorgegebenen SOLL-Wert einer gewünschten Bremsverzögerung die Regelabweichung ermittelt und einen entsprechenden Stellwert an ein Stellglied 11, beispielsweise eine Druckluftbremse, ausgibt.

Der VerzögerungsreglerNerzögerungskraftregler 6 berücksichtigt im Rahmen der Verzögerungsregelung die Zuglänge L_{z} als zusätzlichen IST-Wert zur Kalkulation des Stellwerts derart mit, dass hierdurch ein zuglängenabhängig unterschiedlicher Bremsbedarf aufgrund des sich aus der ermittelten Längsneigung α_{L} im vorderen Zugteil ergebenen Steigerungsprofils entlang der Zuglänge L_{z} berücksichtigt wird.

Ist die Längsneigung α_{L} konstant, so misst der Beschleunigungssensor 7 zur Ermittlung der Längsverzögerung a_{L} die korrekte Zugverzögerung unter Berücksichtigung des Steigungs- oder Gefälleeinflusses. Ändert sich während der Fahrt der Messwert des Winkelmesssensors 10 für die Längsneigung α_{L} im vordersten Fahrzeugteil 2, so kann mithilfe des hinterlegten Zugmodells, welches die Anzahl der Wagen 1a bis 1e sowie deren Länge beinhaltet, und der gemessenen Geschwindigkeit vz die neigungsbezogene Verzögerung eines jeden Wagens 1a bis 1e bestimmt werden. Aus diesen Werten wird permanent ein korrekter IST-Wert als Gesamtwert für die Verzögerung des Zugverbandes berechnet, hier durch eine Mittelung der einzelnen Werte. Mit diesem Verfahren wird der eingangs beschriebene regelungstechnische Fehler über die Zuglänge optimal ausgeglichen.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass zusätzliche oder ergänzende Kalkulationsschritte in dem Verfahren zur Bildung des IST-Werts mitberücksichtigt werden, wie beispielsweise Filterung, Plausibilisierung oder Synchronisierung von Messsignalen.

Ferner ist es auch denkbar, die Messwerterfassung mit in die Bremssteuerung des Schienenfahrzeugs zu integrieren. Hierdurch kann der Vorteil genutzt werden, dass die in einer herkömmlichen Bremssteuerung bereits vorhandene Geschwindigkeitskalkulation für die sogenannte Referenzgeschwindigkeit, welche für die Gleitschutzeinrichtung genutzt wird, zur Verzögerungsregelung mit herangezogen werden kann. Zusätzlich sind durch diese Maßnahme auch weniger elektronische Bauteile erforderlich.

### BEZUGSZEICHENLISTE

- 1: Wagen
- 2: vorderster Zugteil
- 3: hinterster Zugteil
- 4: Baueinheit
- 5: Messwerterfassungseinheit
- 6: Verzögerungsregler/Verzögerungskraftregler
- 7: Beschleunigungssensor
- 8: Fahrzeugrad
- 9: Drehzahlsensor
- 10: Winkelmesssensor
- 11: Stellglied

- a_{L}: Längsverzögerung
- α_{L}: Längsneigung
- vz: Zuggeschwindigkeit
- Lz: Zuglänge
- as: SOLL-Wert (für Verzögerungsregelung)

## Patentansprüche

1. Verfahren zur Ermittlung von bremsungsrelevanten IST-Werten und für die Durchführung einer verzögerungsgeregelten Bremsung eines aus vielen Wagen (1a - 1e) bestehenden Zugverbands, bei welchem die Längsverzögerung (a_{L}) und die Längsneigung (α_{L}) als IST-Werte berücksichtigt werden, woraus durch einen Verzögerungsregler/Verzögerungskraftregler (6) nach Maßgabe eines vorgegebenen SOLL-Wertes einer gewünschten Bremsverzögerung ein die Regelabweichung ausgleichender Stellwert für ein Stellglied (11) der Bremse ermittelt wird,
**dadurch gekennzeichnet, dass**
- die Erfassung und/oder Kalkulation der bremsungsrelevanten IST-Werte durch eine im vordersten Zugteil (2) positionierte und mehrere Sensoren (7, 9, 10) aufweisende zentrale Messwerterfassungseinheit (5) für den gesamten Zugverband durchgeführt wird, wobei
- die Zuglänge (Lz) als zusätzlicher zentral ermittelter IST-Wert durch den Verzögerungsregler/Verzögerungskraftregler (6) derart mit berücksichtigt wird, dass
- bei der Kalkulation des Stellwertes zum Ausgleich der Regelabweichung ein zuglängenabhängig unterschiedlicher Bremsbedarf aufgrund des sich aus der ermittelten Längsneigung (**α**_{L}) im vordersten Zugteil (2) ergebenen Steigerungsprofils entlang der Zuglänge (Lz) berücksichtigt wird.

2. Verfahren nach Anspruch 1,
**dadurch gekennzeichnet, dass**
die neigungsbezogene Längsverzögerung (a_{L}) für jeden Wagen (1a - 1e) des Zugverbandes seperat ermittelt wird.

3. Verfahren nach Anspruch 2,
**dadurch gekennzeichnet, dass**
zur Kalkulation eines einheitlichen Stellwertes ein Mittelwert aus den einzelnen neigungsbezogenen Längsverzögerungen (a_{L}) für jeden Wagen (1a - 1e) gebildet wird.

4. Verfahren nach Anspruch 1,
**dadurch gekennzeichnet, dass**
die Zuglänge (Lz) aus einem Zugmodell kalkuliert wird, das die Anzahl der aneinandergekoppelten Wagen (1a - 1e) des Zugverbands sowie deren jeweilige Länge berücksichtigt.

5. Verfahren nach Anspruch 1,
**dadurch gekennzeichnet, dass**
als zusätzlicher zentral ermittelter IST-Wert die Geschwindigkeit (vz) des Zugverbands durch den VerzögerungsreglerNerzögerungskraftregler (6) berücksichtigt wird.

6. Verfahren nach Anspruch 5,
**dadurch gekennzeichnet, dass**
der IST-Wert der Geschwindigkeit (vz) durch eine Drehzahlmessung an einem Fahrzeugrad (8) und/oder über eine GPS-Einheit und/ode reine Radareinheit ermittelt wird.

7. Verfahren nach Anspruch 1 oder 5,
**dadurch gekennzeichnet, dass**
der IST-Wert der Längsverzögerung (a_{L}) durch mathematische Ableitung aus dem Signal der Geschwindigkeit (vz) und/oder durch Messung mittels eines Beschleunigungssensors (7) ermittelt wird.

8. Verfahren nach Anspruch 1,
**dadurch gekennzeichnet, dass**
der IST-Wert der Längsneigung (α_{L}) durch einen Winkelmesssensor (10) und/oder über ein in einer GPS-Einheit hinterlegtes Höhenprofil ermittelt wird.

9. Verfahren nach Anspruch 1,
**dadurch gekennzeichnet, dass**
der IST-Wert der Längsneigung (**α**_{L}) durch einen Vergleich eines durch einen Beschleunigungssensor (7) ermittelten steigungskompensierten Signals der Längsverzögerung (a_{L}) mit einem über die mathematische Ableitung der Geschwindigkeit (vz) nicht-steigungskompensierten Signals der Längsverzögerung (a_{L}) erfolgt.

10. Einrichtung zur Ermittlung von bremsungsrelevanten IST-Werten eines aus vielen Wagen (1a-1e) bestehenden Zugverbands, für die Durchführung einer verzögerungsgeregelten Bremsung des Zugverbands, welche die Längsverzögerung (a_{L}) und die Längsneigung (α_{L}) als IST-Werte berücksichtigt, woraus ein Verzögerungsregler/Verzögerungskraftregler (6) nach Maßgabe eines vorgegebenen SOLL-Wertes (as) einer gewünschten Bremsverzögerung ein die Regelabweichung ausgleichenden Stellwert für ein Stellglied (11) der Bremse ausgibt,
**dadurch gekennzeichnet, dass**
- eine im vordersten Zugteil (2), des aus vielen Wagen (1a-1e) bestehenden Zugverbands, positionierte und mehrere Sensoren (7, 9, 10) aufweisende zentrale Messwerterfassungseinheit (5) zur Erfassung und/oder Kalkulation der bremsungsrelevanten IST-Werte für den gesamten Zugverband vorgesehen ist, wobei
- der Verzögerungsregler/Verzögerungskraftregler (6) die Zuglänge (Lz) als zusätzlicher zentral ermittelter IST-Wert derart berücksichtigt, dass
- die Kalkulation des Stellwertes zum Ausgleich der Regelabweichung unter Berücksichtigung eines zuglängenabhängig unterschiedlichen Bremsbedarfs aufgrund des sich aus der ermittelten Längsneigung (a_{L}) im vordersten Zugteil (2) ergebenen Steigerungsprofils entlang der Zuglänge (Lz) erfolgt.

11. Einrichtung nach Anspruch 10,
**dadurch gekennzeichnet, dass**
die Messwerterfassungseinheit (5) die Zuglänge (Lz) aus einem Zugmodell ermittelt, das die Anzahl der aneinandergekoppelten Wagen (1a - 1e) des Zugverbands sowie deren jeweilige Länge berücksichtigt.

12. Zugverband mit vielen Wagen (1a - 1e), insbesondere Schienenfahrzeug, mit einer Einrichtung nach einem der Ansprüche 10 oder 11,
**dadurch gekennzeichnet, dass**
die Messwerterfassungseinheit (5) und der Verzögerungsregler/ Verzögerungskraftregler (6) in einer Baueinheit (4) zusammengefassst in dem vorderen Zugteil (2) angeordnet ist.

## Claims

1. Method for determining braking-relevant actual values and for carrying out deceleration-controlled braking of a train consisting of a plurality of carriages (1a to 1e), in which method the longitudinal deceleration (a_{L}) and the longitudinal inclination (a_{L}) are taken into account as actual values, from which by virtue of a deceleration regulator/deceleration force regulator (6), in accordance with a predetermined set-point value of a desired braking deceleration, a manipulated variable that compensates the control deviation is determined for an actuator (11) of the brake,
**characterised in that**
- the detection and/or calculation of the braking-relevant actual values is carried out for the train as a whole by a central measured-value determination unit (5) which is located in the foremost part (2) of the train and comprises a number of sensors (7, 9, 10), wherein
- the length of the train (Lz) is also taken into account as an additional centrally determined actual value by the deceleration regulator/deceleration force regulator (6), in such manner that
- in calculating the manipulated variable for compensating the control deviation, a braking demand which varies as a function of the length of the train is taken into account on the basis of the gradient profile along the length of the train (Lz) indicated by the longitudinal inclination (a_{L}) of the foremost part (2) of the train.

2. Method according to Claim 1,
**characterised in that**
the inclination-related longitudinal deceleration (a_{L}) is determined separately for each carriage (1a to 1e) of the train.

3. Method according to Claim 2,
**characterised in that**
to calculate a consistent manipulated variable, an average value is formed from the individual inclination-related longitudinal decelerations (a_{L}) for each carriage (1a to 1e).

4. Method according to Claim 1,
**characterised in that**
the train length (L_{Z}) is calculated from a train model which takes into account the number of carriages (1a to 1e) of the train coupled to one another and their respective lengths.

5. Method according to Claim 1,
**characterised in that**
as an additional centrally determined actual value, the speed (vz) of the train is taken into account by the deceleration regulator/deceleration force regulator (6).

6. Method according to Claim 5,
**characterised in that**
the actual value of the speed (vz) is determined from a rotation speed measurement at a vehicle wheel (8) and/or by means of a GPS unit and/or a radar unit.

7. Method according to Claims 1 or 5,
**characterised in that**
the actual value of the longitudinal deceleration (a_{L}) is determined by mathematical derivation from the signal of the speed (vz) and/or by measurement by an acceleration sensor (7).

8. Method according to Claim 1,
**characterised in that**
the actual value of the longitudinal inclination (a_{L}) is determined by an angle measurement sensor (10) and/or by an elevation profile stored in a GPS unit.

9. Method according to Claim 1,
**characterised in that**
the actual value of the longitudinal inclination (a_{L}) is obtained by comparing a gradient-compensated signal of the longitudinal deceleration (a_{L}) determined by an acceleration sensor (7), with a non-gradient-compensated longitudinal deceleration (a_{L}) signal obtained by mathematical derivation from the speed (vz).

10. Device for determining braking-relevant actual values of a train consisting of a plurality of carriages (1a to 1e), for carrying out deceleration-controlled braking of the train, which takes into account the longitudinal deceleration (a_{L}) and the longitudinal inclination (a_{L}) as actual values, by virtue of which a deceleration regulator/deceleration force regulator (6), in accordance with a predetermined set-point value of a desired braking deceleration, generates a manipulated variable that compensates the control deviation determined for an actuator (11) of the brake,
**characterised in that**
- a central measured-value determination unit (5), which is located in the foremost part (2) of the train consisting of a plurality of carriages (1a to 1e) and which comprises a number of sensors (7, 9, 10), is provided for the determination and/or calculation of the braking-relevant actual values for the train as a whole,
wherein
- the deceleration regulator/deceleration force regulator (6) takes into account the length (Lz) of the train as an additional centrally determined actual value, in such manner that
- the calculation of the manipulated variable for compensating the control deviation is carried out taking into account a braking demand which varies as a function of the length of the train, on the basis of the gradient profile along the length of the train (Lz) indicated by the longitudinal inclination (a_{L}) of the foremost part (2) of the train.

11. Device according to Claim 10,
**characterised in that**
the measured-value determination unit (5) determines the length (L_{Z}) of the train from a train model, which takes into account the number of carriages (1a to 1e) of the train coupled to one another, and their respective lengths.

12. Train with a plurality of carriages (1a to 1e), in particular a rail vehicle, with a device according to either of Claims 10 or 11,
**characterised in that**
the measured-value determination unit (5) and the deceleration regulator/deceleration force regulator (6) are combined in an assembly (4) arranged in the foremost part (2) of the train.

## Revendications

1. Procédé de détermination de valeurs réelles pertinentes pour le freinage et pour effectuer un freinage régulé en décélération d'un convoi constitué de plusieurs voitures (la-le), dans lequel on prend en compte, comme valeurs réelles, la décélération (a_{L}) longitudinale et l'inclinaison (α_{L}) longitudinale, à partir desquelles on détermine, par un régulateur de décélération / régulateur de force de décélération (6) en fonction d'une valeur de consigne donnée à l'avance d'une décélération de freinage souhaitée, une valeur de réglage, compensant l'écart de réglage, d'un actionneur (11) du frein,
**caractérisé en ce que**
- on effectue le relevé et/ou le calcul des valeurs réelles pertinentes pour le freinage par une unité (5) centrale de relevé de valeur de mesure placée dans la partie (2) la plus en avant du train et ayant plusieurs capteurs (7, 9, 10) pour l'ensemble du convoi, dans lequel
- on prend en compte la longueur (Lz) du train comme valeur réelle supplémentaire déterminée centralement par le régleur de décélération / régleur de la force de décélération (6), de manière à,
- lors du calcul de la valeur de réglage pour la compensation de l'écart de régulation, prendre en compte un besoin de freinage différent, en fonction de la longueur du train, sur la base du profil de montée suivant la longueur (Lz) du train obtenu à partir de l'inclinaison (α_{L}) longitudinale déterminée dans la partie (2) la plus en avant du train.

2. Procédé suivant la revendication 1,
**caractérisé en ce que**
on détermine la décélération (a_{L}) longitudinale rapportée à l'inclinaison séparément pour chaque voiture (la-le) du convoi.

3. Procédé suivant la revendication 2,
**caractérisé en ce que**
pour le calcul d'une valeur de réglage unitaire, on forme une valeur moyenne à partir des diverses décélérations (a_{L}) longitudinales rapportées à l'inclinaison pour chaque voiture (la-le).

4. Procédé suivant la revendication 1,
**caractérisé en ce que**
on calcule la longueur (Lz) du train à partir d'un modèle de train, qui tient compte du nombre de voitures (la-le) attelées les unes aux autres du convoi ainsi que de leur longueur respective.

5. Procédé suivant la revendication 1,
**caractérisé en ce que**
on prend en compte, par le régleur de décélération / régleur de la force de décélération (6), la vitesse (Vz) du convoi comme valeur réelle supplémentaire déterminée centralement.

6. Procédé suivant la revendication 5,
**caractérisé en ce que**
l'on détermine la valeur réelle de la vitesse (Vz) par une mesure de vitesse de rotation sur une roue (8) du véhicule ou par l'intermédiaire d'une unité GPS et/ou d'une simple unité de radar.

7. Procédé suivant la revendication 1 ou 5,
**caractérisé en ce que**
l'on détermine la valeur réelle de la décélération (a_{L}) longitudinale par dérivation mathématique du signal de la vitesse (Vz) et/ou par mesure au moyen d'un capteur (7) d'accélération.

8. Procédé suivant la revendication 1,
**caractérisé en ce que**
l'on détermine la valeur réelle de l'inclinaison (α_{L}) longitudinale par un capteur (10) de mesure d'angle et/ou par un profil de niveau mis en mémoire dans une unité GPS.

9. Procédé suivant la revendication 1,
**caractérisé en ce que**
on obtient la valeur réelle de l'inclinaison (α_{L}) longitudinale en comparant un signal compensé en montée, déterminé par un capteur (7) d'accélération, de la décélération (a_{L}) longitudinale à un signal, non compensé en montée par la dérivation mathématique de la vitesse (Vz), de la décélération (a_{L}) longitudinale.

10. Dispositif de détermination de valeurs réelles pertinentes pour le freinage d'un convoi constitué de plusieurs voitures (la-le), pour effectuer un freinage régulé en décélération du convoi, qui prend en compte la décélération (a_{L}) longitudinale et l'inclinaison (α_{L}) longitudinale comme valeurs réelles, à partir desquelles un régleur de décélération / régleur de la force de décélération (6) donne, en fonction d'une valeur (as) de consigne donnée à l'avance d'une décélération de freinage souhaitée une valeur de réglage, compensant l'écart de réglage d'un actionneur (11) du frein, **caractérisé en ce que**
- il est prévu une unité (5) centrale de relevé de valeur de mesure, placée dans la partie (2) la plus en avant du convoi constitué de plusieurs voitures (la-le) et ayant plusieurs capteurs (7, 9, 10) de relevé et/ou de calcul des valeurs réelles pertinentes pour le freinage pour l'ensemble du convoi, dans lequel
- le régleur de décélération / régleur de la force de décélération (6) prend en compte la longueur (Lz) du train comme valeur réelle supplémentaire déterminée centralement, de manière à ce que
- le calcul de la valeur de réglage, pour la compensation de l'écart de réglage, s'effectue en tenant compte d'un besoin de freinage différent en fonction de la longueur du train sur la base du profil de montée, suivant la longueur (Lz) du train, obtenu dans la partie (2) la plus en avant du train à partir de l'inclinaison (a_{L}) longitudinale déterminée.

11. Dispositif suivant la revendication 10,
**caractérisé en ce que**
l'unité (5) de relevé de valeur de mesure détermine la longueur (Lz) du train à partir d'un modèle de train, qui tient compte du nombre de voitures (la-le) attelées les unes aux autres du convoi ainsi que de leur longueur respective.

12. Convoi ayant plusieurs voitures (la-le), notamment véhicule ferroviaire, comprenant un dispositif suivant l'une des revendications 10 ou 11,
**caractérisé en ce que**
l'unité (5) de relevé de valeur de mesure et le régleur de décélération / régleur de la force de décélération (6) sont disposés dans la partie (2) la plus avant du train, en étant rassemblés dans un module (4).
